# EUROPÄISCHE PATENTSCHRIFT

(11) **EP 3 186 014 B1**
(45) Veröffentlichungstag und Bekanntmachung des Hinweises auf die Patenterteilung: **15.12.2021**
(21) Anmeldenummer: 15756904.7
(22) Anmeldetag: 28.08.2015
(51) Int. Cl.: B05C 3/00, B05C 3/04, B05C 3/109, B05C 19/04, B08B 3/04

(54) **VORRICHTUNG UND VERFAHREN ZUR OBERFLÄCHENBEHANDLUNG VON FORMTEILEN**
DEVICE AND METHOD FOR TREATING THE SURFACES OF MOULDED PARTS
DISPOSITIF ET PROCÉDÉ DE TRAITEMENT DE SURFACE DE PIÈCES MOULÉES

(30) Priorität: 29.08.2014 DE 102014112508
(43) Veröffentlichungstag der Anmeldung: 05.07.2017
(60) Teilanmeldung: 18206829.6
(73) Patentinhaber: DyeMansion GmbH, 82152 Planegg (DE)
(72) Erfinder: EWALD, Felix, 78166 Donaueschingen (DE); KRAMER, Philipp, 81243 München (DE)
(74) Vertreter: 2s-ip Schramm Schneider Bertagnoll Patent- und Rechtsanwälte Part mbB
(86) Internationale Anmeldenummer: PCT/EP2015/069805
(87) Internationale Veröffentlichungsnummer: WO 2016/030532

(56) Entgegenhaltungen:
- DE-A1-102010 001 101
- US-A- 2 038 260
- US-A- 3 574 561
- US-A- 3 762 553
- US-A- 4 726 318

## Beschreibung

### Gebiet der Erfindung

Die Erfindung betrifft eine Vorrichtung und ein Verfahren zum Färben von Formteilen. Die Offenbarung betrifft weiter eine Kapsel für die Vorrichtung, sowie die Verwendung einer Kapsel in einer Vorrichtung zur Oberflächenbehandlung. Die Offenbarung betrifft insbesondere eine Vorrichtung und ein Verfahren zur Oberflächenbehandlung von Formteilen, die in einem pulverbasierten Fertigungs- bzw. Druckverfahren (3D-Druckverfahren) hergestellt werden.

### Stand der Technik und Hintergrund der Erfindung

Oberflächen von in einem 3D-Druckverfahren hergestellten Formteilen werden im Stand der Technik vorzugsweise manuell behandelt. So werden solche Formteile beispielsweise manuell eingefärbt oder manuell imprägniert. Um die Oberflächenbehandlung effizienter zu gestalten, ist es bekannt, die zu bearbeitenden Formteile in ein Gefäß, etwa in einen Färbetopf zu geben, in das auch das Färbemittel gegeben wird. Dabei können mehrere Formteile beispielsweise gleichzeitig eingefärbt werden. Üblicherweise müssen in einem 3D-Druckverfahren hergestellte Formteile vor und nach dem Färbevorgang vor- bzw. nachbehandelt werden, wofür ebenfalls jeweils ein entsprechendes Gefäß vorgesehen wird, in denen die Vor- bzw. Nachbehandlungsschritte durchgeführt werden.

Für eine Serienfertigung von in einem 3D-Druckverfahren hergestellten Formteilen ist diese Vorgehensweise allerdings nicht geeignet. Zum einen muss für ein gleichbleibendes Färbeergebnis bei einer Vielzahl von Formteilen gewährleistet werden, dass die Zusammensetzung des Färbemittels bei jedem Färbevorgang dieselbe ist, zum anderen müssen die Formteile manuell von dem Gefäß der Vorbehandlung in das Färbegefäß und von dem Färbegefäß in das Gefäß der Nachbehandlung gegeben werden. Ferner muss in allen drei Behandlungsschritten gewährleistet werden, dass die jeweiligen Prozessparameter innerhalb gewisser Toleranzgrenzen bleiben, und zwar über lange Zeiträume, wenn eine große Anzahl von Formteilen mit gleichbleibendem Ergebnis zu behandeln ist.

Das Dokument US-A-4726318 offenbart eine Vorrichtung zum Färben von Formteilen gemäß dem Oberbegriff des Anspruchs 1, und ein Verfahren zum Färben von Formteilen, wobei Formteile in einem Korb der Vorrichtung gegeben und gefärbt werden.

### Aufgabe der Erfindung

Aufgabe der vorliegenden Erfindung ist es daher, Lösungen zu schaffen, die es erlauben, die Oberflächenbehandlung von Formteilen, insbesondere von in einem pulverbasierten Fertigungs- bzw. Druckverfahren (3D-Druckverfahren) hergestellten Formteilen, effizienter zu gestalteten, und insbesondere eine Oberflächenbehandlung solcher Formteile in industriellem Maßstab, insbesondere in der Serienfertigung, zu ermöglichen, wobei gleichzeitig ein gleichbleibendes Behandlungsergebnis gewährleistet werden soll.

### Erfindungsgemäße Lösung

Diese Aufgabe wird erfindungsgemäß durch eine Vorrichtung zum Färben von Formteilen, und durch ein Verfahren zur Oberflächenbehandlung von Formteilen gelöst. Vorteilhafte Ausgestaltungen und Weiterbildungen der Erfindung ergeben sich aus den jeweiligen abhängigen Ansprüchen.

Bereitgestellt wird demnach eine Vorrichtung zum Färben von Formteilen gemäß Anspruch 1.

Die Vorrichtung eignet sich insbesondere zum Färben von in einem pulverbasierten Fertigungs- bzw. Druckverfahren (3D-Druckverfahren) hergestellten Formteilen aus Kunststoff, Sand und/oder Gips. Ferner wird durch diese Vorrichtung erstmals eine industrielle Oberflächenbehandlung, insbesondere ein Färben von in einem 3D-Druckverfahren hergestellten Formteilen möglich, was insbesondere in einer Serienfertigung vorteilhaft ist.

Das in die Kapsel eingebrachte Gas und/oder einem Fluid bewirkt, dass das in der Kapsel vorhandene Oberflächenbehandlungsmittel aus der Kapsel austritt und in den Innenraum des Behältnisses gelangt.

Durch das Vorsehen einer oder mehrerer Kapseln, in die das Oberflächenbehandlungsmittel aufgenommen ist, wird vermieden, dass das Oberflächenbehandlungsmittel direkt in das Behältnis gegeben werden muss. Es muss lediglich die Kapsel mit dem Oberflächenbehandlungsmittel in das Behältnis gegeben werden. Dadurch wird es ermöglicht vorkonfektionierte Kapseln zu verwenden, was ein gleichbleibendes Behandlungsergebnis auch bei mehreren Färbevorgängen gewährleistet.

Die Kapsel ist in dem Innenraum des Behältnisses anordenbar. Die Kapsel kann als Vorratsbehälter ausgestaltet sein.

Die Beaufschlagungseinrichtung kann zumindest eine Zuleitung aufweisen, um das Gas und/oder Fluid der zumindest einen Kammer der Kapsel zuzuführen, wobei die Zuleitung durch eine Wandung des Behältnisses oder durch den ersten Deckel in den Innenraum des Behältnisses geführt ist.

Vorteilhaft ist es, wenn
- das innenraumseitige Ende der Zuleitung als Düse ausgestaltet ist, oder
- im Innenraum des Behältnisses zumindest eine Düse angeordnet ist, wobei die Düse mit der Zuleitung gekoppelt oder koppelbar ist,
wobei die Düse angepasst ist, eine Wandung der Kapsel zu durchdringen oder durchzustechen, wenn die Kapsel gegen die Düse gedrückt wird.

In einer Ausgestaltung der Erfindung kann das innenraumseitige Ende der Zuleitung mit Einlassöffnungen der Kapsel koppelbar sein.

Die Kapselaufnahme kann in dem ersten Deckel ausgebildet sein und einen Aufnahmeraum zur Aufnahme der Kapsel bilden.

Der Kapselaufnahme kann ein zweiter Deckel zugeordnet sein, mit dem die Kapselaufnahme verschließbar ist und/oder mit dem die in der Kapselaufnahme angeordnete Kapsel gegen die Öffnung der Kapselaufnahme gedrückt wird, wobei Auslassöffhungen der Kapsel der Öffnung zugewandt sind, wobei
- der zweite Deckel die Kapselaufnahme druck-, fluid- und/oder luftdicht verschließt, und/oder
- die gegen die Öffnung gedrückte Kapsel die Öffnung druck-, fluid- und/oder luftdicht verschließt.

An der Öffnung der Kapselaufnahme kann ein umlaufender Dichtungsring angeordnet sein, gegen den die in der Kapselaufnahme des Deckels angeordnete Kapsel gedrückt wird.

Zwischen dem Rand des Behältnisses und dem ersten Deckel kann ein umlaufender Dichtungsring angeordnet sein.

Vorteilhaft ist es, wenn der erste Deckel schwenkbar an dem Behältnis angeordnet ist. Vorteilhaft ist es zudem, wenn der zweite Deckel schwenkbar an dem ersten Deckel angeordnet ist.

Die Kapselaufnahme kann so in dem ersten Deckel ausgebildet sein, dass der Aufnahmeraum zur Aufnahme der Kapsel in den Innenraum hineinragt.

An dem zweiten Deckel können Koppelglieder vorgesehen sein, um die Druckluftschläuche beim Schließen des zweiten Deckels mit den Einlassöffnungen der in der Kapselaufnahme angeordneten Kapsel luft- und druckdicht zu verbinden. Damit muss ein Anwender lediglich die Kapsel einlegen und den zweiten Deckel schließen. Ein manuelles Anschließen der Kapsel an den Kompresser bzw. an die Druckluftschläuche entfällt.

In einer Ausgestaltung der Erfindung kann die Kapselaufnahme als Kapselbehälter mit der zumindest einen Öffnung ausgestaltet sein, insbesondere als Gitterbox.

Die erfindungsgemäße Vorrichtung weist einen in den Innenraum des Behältnisses ein- und ausbringbaren Korb zur Aufnahme der Formteile auf. Die Formteile können so außerhalb der Vorrichtung in den Korb eingelegt werden und dann zusammen mit dem Korb in den Behandlungsraum der Vorrichtung eingebracht werden.

Die Kapselaufnahme bzw. die Gitterbox ist an dem Korb angeordnet, vorzugsweise am Boden des Korbes, besonders bevorzugt zumindest teilweise an der bodenseitigen Außenseite des Korbes. Die Kapsel ist hierbei so in der Kapselaufnahme anordenbar, dass sie beim Einbringen des Korbes in das Behältnis an der Beaufschlagungseinrichtung aufliegt oder gegen die Beaufschlagungseinrichtung, insbesondere gegen die Düsen gedrückt wird.

Nach dem Einbringen des Korbes in das Behältnis kann die Kapsel auch beabstandet zu der Beaufschlagungseinrichtung sein. Die Beaufschlagungseinrichtung oder Teile davon können dann an die Kapsel herangeführt werden.

Die Kapsel selbst ist hierbei vorzugsweise so ausgestaltet, dass das Drücken gegen die Düsen ein Durchdringen oder ein Durchstechen der Wandung der Kapsel bewirkt. Durch das Durchdringen oder Durchstechen wird so eine Öffnung in der Kapselwandung gebildet, durch die das Oberflächenbehandlungsmittel aus der Kapsel austreten und in den Innenraum des Behältnisses gelangen kann, insbesondere wenn über die Düsen das Gas und/oder Fluid der Kapsel zugeführt wird.

Das Drücken der Kapsel gegen die Düsen kann von dem ersten Deckel bewirkt werden, wenn der Deckel geschlossen wird. Durch das Schließen des Deckels kann der Korb leicht nach unten gedrückt werden, was wiederum bewirkt, dass die in der Kapselaufnahme angeordnete Kapsel gegen die Düsen gedrückt wird und die Düsen den Boden der Kapsel durchstechen.

Vorteilhaft ist es, wenn die Anordnung zum Einbringen der Oberflächenbehandlungsmittel einen Kompressor aufweist, der mit der Kapsel, vorzugsweise über die zumindest eine Zuleitung, koppelbar ist, um das Gas und/oder das Fluid mit einem Druck in den Innenraum der Kapsel einzubringen, der größer ist als der Innendruck des Behältnisses. In einer Ausgestaltung kann als Fluid "normales Wasser" aus der Wasserleitung sein, wobei der dort zur Verfügung stehende Wasserdruck gegebenenfalls ausreichend sein kann.

Der zweite Deckel kann eine Anzahl von Pneumatikkoppelgliedern aufweisen, die mit den Zuleitungen einerseits mit dem Kompressor und andererseits mit den Einlassöffnungen der Kapsel koppelbar sind.

Vorteilhaft ist es, wenn zumindest eine Düse in axialer Richtung bewegbar ausgestaltet ist. Die Düse kann so beispielsweise aus der Einlassöffnung der Kapsel herausgefahren, nachdem die Düse mittels Durchstechen des Kapselbodens die Einlassöffhung erzeugt hat. Die Düse fungiert hierbei als eine Art "Nadel" zum Aufstechen der Kapsel.

Die Vorrichtung kann
- eine Fluidzufuhr aufweisen, über das ein Fluid, insbesondere Wasser in den Innenraum einbringbar ist, wobei der Fluidzufuhr ein Absperrventil zugeordnet ist, und/oder
- eine Einrichtung aufweisen, mit der der Innenraum mit einem Unterdruck und/oder mit einem Überdruck beaufschlagbar ist.

Vorteilhafterweise weist die Vorrichtung einen Abfluss auf, um den Innenraum zu entleeren, vorzugsweise mittels einer mit dem Abfluss koppelbaren Unterdruckabsaugeinrichtung.

An dem Behältnis kann eine Heiz- und/oder Kühleinrichtung, vorzugsweise eine Heiz- und/oder Kühlmanschette angeordnet sein, zum Aufheizen und/oder Abkühlen des Innenraumes. Zusätzlich oder alternativ kann eine externe Heiz- und/oder Kühleinrichtung vorgesehen sein, um das sich in dem Innenraum befindliche oder dem Innenraum zuzuführende Fluid aufzuheizen oder abzukühlen.

Die Vorrichtung kann eine Anzahl von Messwertfühler, insbesondere einen Temperaturfühler, Druckfühler und/oder pH-Wertfühler aufweisen, die dem Innenraum zugeordnet sind.

Die Vorrichtung kann ein Rührwerk, insbesondere Magnetrührer, Schrägblattrührer oder Stabrührer, aufweisen, um etwa ein in dem Innenraum vorhandenes flüssiges Trägermaterial mit dem zugeführten Oberflächenbehandlungsmittel zu mischen.

Die Beaufschlagungseinrichtung kann angepasst sein, eine Anzahl von in der Kapsel ausgebildeten Kammern getrennt und unabhängig voneinander mit dem Gas und/oder dem Fluid zu beaufschlagen. Damit können etwa mehrere Kammern der Kapsel zeitlich nacheinander geöffnet werden und das in den Kammern enthaltene Oberflächenbehandlungsmittel kann zeitlich nacheinander dem Innenraum zugeführt werden.

Zusätzlich kann die Vorrichtung eine Zufuhreinrichtung zum Zuführen von Reinigungsmittel in den Innenraum des Behältnisses aufweisen. Der Innenraum kann so bei geschlossenem Deckel einer Reinigung unterzogen werden. Das Reinigungsmittel kann dann nach dem Reinigungsvorgang über die Abflussvorrichtung aus dem Innenraum abgeführt werden. Die Zufuhreinrichtung kann eine Reinigungsdüse umfassen, die in einer Ausgestaltung der Erfindung in der Seitenwandung des Behältnisses angeordnet sein kann. Ferner kann eine Reinigungsdüse in dem Deckel vorgesehen sein, um etwa Spülwasser dem Behältnis zuzuführen.

An den offenen Enden der Düsen, das heißt an jenen Enden, die in die Kapsel eindringen, können Klingen angeordnet sein, um ein Durchstechen der Kapselwandung zu erleichtern.

Die Vorrichtung weist vorteilhafterweise eine Datenverarbeitungseinrichtung auf oder ist mit einer Datenverarbeitungseinrichtung koppelbar, wobei die Datenverarbeitungseinrichtung operativ mit dem Kompressor und/oder mit den Messwertfühlern koppelbar ist, und die angepasst ist, das Beaufschlagen der Kapsel mit dem Fluid und/oder Gas durch den Kompressor zu steuern und/oder die von den Messwertfühlern erfassten Messgrößen zu überwachen.

Das Volumen des Innenraumes kann zwischen 5000 cm³ und 0,5 m³ betragen. Für eine großindustrielle Fertigung können aber auch größere Volumina vorgesehen sein.

Besonders vorteilhaft ist es, wenn die Vorrichtung eine Leseeinrichtung aufweist, insbesondere eine Barcode-, QR-Code-, RFID- oder NFC-Leseeinrichtung zum Lesen eines an der Kapsel angebrachten Barcodes, QR-Codes, RFID-Tags oder NFC-Tags. Vorzugsweise ist die Leseeinrichtung an der Innenseite des zweiten Deckels oder an einer Seitenwandung der Kapselaufnahme oder an einer seitlichen Innenwandung des Behältnisses angeordnet, und zwar so, dass der Code oder das Tag an der Kapsel gelesen bzw. ausgelesen werden kann.

Die Leseeinrichtung ist vorzugsweise mit der Datenverarbeitungseinrichtung gekoppelt und angepasst, den gelesenen Code bzw. die aus dem Tag ausgelesenen Daten an die Datenverarbeitungseinrichtung zu übertragen, wobei der Code bzw. die Daten des Tag angeben, welche Oberflächenbehandlungsmittel sich in welchen Kammern der Kapsel befinden und welche Parameter bei der Oberflächenbehandlung wie einzustellen sind. Der Benutzer muss damit nur mehr die zu behandelnden Formteile und die Kapsel in das Behältnis einbringen und den Deckel schließen.

Anhand der Daten bzw. anhand des Codes kann führ die erfindungsgemäße Vorrichtung das Oberflächenbehandlungsprogramm vollautomatisch und ohne manuellen Eingriff durch. Gleichbleibende Ergebnisse der Oberflächenbehandlung werden so gewährleistet.

Bereit gestellt wird des Weiteren eine Kapsel, insbesondere zur Verwendung in einer erfindungsgemäßen Vorrichtung zur Oberflächenbehandlung, wobei
- die Kapsel ein weitgehend druckstabiles und fluiddichtes Gehäuse aufweist,
- im Inneren des Gehäuses zumindest eine Kammer ausgebildet ist zur Aufnahme eines flüssigen und/oder pulverförmigen Oberflächenbehandlungsmittels,
- in der Wandung des Gehäuses zumindest eine Auslassöffnung ausgebildet ist oder ausbildbar ist, wobei durch die Auslassöffnung das Oberflächenbehandlungsmittel entweichen kann, und
- die zumindest eine Kammer der Kapsel mit einem Fluid und/oder Gas beaufschlagbar ist, um das Entweichen des Oberflächenbehandlungsmittels durch die Auslassöffnung zu bewirken.

In der Wandung des Gehäuses der Kapsel kann zumindest eine Einlassöffnung ausgebildet oder ausbildbar sein, wobei durch die Einlassöffnung die zumindest eine Kammer der Kapsel mit dem Fluid und/oder Gas beaufschlagbar ist.

Im Inneren des Gehäuses der Kapsel können zumindest zwei, vorzugsweise drei Kammern ausgebildet sein, wobei jede Kammer ein flüssiges und/oder pulverförmiges Oberflächenbehandlungsmittel aufnimmt, wobei jeder Kammer zumindest eine Einlassöffnung und zumindest eine Auslassöffnung zugeordnet ist, wobei die Kammern unabhängig voneinander mit dem Fluid und/oder Gas beaufschlagbar sind beaufschlagbar sind und wobei aus jeder Kammer unabhängig voneinander das Oberflächenbehandlungsmittel entweichen kann.

In dem Gehäuse können Kammerwandungen vorgesehen sein, die die Kammern fluid- und luftdicht voneinander trennen, wobei die Kammerwandungen vorzugsweise aus einem stabilen Material bestehen.

In einer Ausgestaltung der Kapsel können die Einlassöffnungen gleichzeitig auch die Auslassöffnungen sein. Das heißt, durch das Aufstechen der Kapsel mit der Düse wird eine Öffnung erzeugt, um der Kammer das Fluid und/oder Gas zuzuführen (Einlassöffnung). Gleichzeitig kann aus derselben Öffnung das Oberflächenbehandlungsmittel austreten (Auslassöffnung).

Die Auslassöffnungen können jeweils eine Sperreinrichtung aufweisen, die angepasst sind, die Auslassöffnungen für ein Entweichen des Oberflächenbehandlungsmittels zu öffnen, sobald der Druck in der jeweiligen Kammer einen vorbestimmten Wert überschreitet.

Die Sperreinrichtungen können als Rückschlagventile ausgestaltet sein, die ab einem bestimmten Druck in der jeweiligen Kammer öffnen. Alternativ können die Sperreinrichtungen auch Membrane umfassen, die bei einem bestimmten Druck in der jeweiligen Kammer zerstört werden.

Alternativ können die Sperreinrichtungen auch so ausgestaltet sein, dass sich diese unabhängig vom jeweiligen Druck in der Kammer der Kapsel öffnen lassen. Die Sperreinrichtungen können etwa als Magnetventile ausgestaltet sein, die von einer externen Einrichtung, etwa eine Datenverarbeitungseinrichtung oder eine Steuereinrichtung, aktiviert und deaktiviert werden können. Vorteilhaft ist es hierbei, wenn die jeweiligen Kammern der Kapseln zum Zeitpunkt des Öffnens der Ventile bereits mit Druck beaufschlagt sind oder bei Öffnen der der Ventile mit Druck beaufschlagt werden.

Vorteilhaft ist es, wenn zumindest ein Abschnitt der Wandung des Gehäuses der Kapsel als Öffnungs- bzw. Einstichbereich ausgebildet ist, wobei in dem Öffnungs- bzw. Einstichbereich die Auslassöffnung und/oder die Einlassöffnung herstellbar sind. Vorteilhaft ist es hierbei, wenn der Öffnungs- bzw. Einstichbereich dünnwandiger ausgestaltet ist als die übrige Wandung des Gehäuses.

In dem Öffnungs- bzw. Einstichbereich kann zumindest eine Sollbruchstelle vorgesehen sein.

An dem Gehäuses der Kapsel kann ein Barcode, QR-Code, RFID-Tag oder NFC-Tag angeordnet sein, die Informationen darüber enthalten bzw. speichern, welches Oberflächenbehandlungsmittel sich in welcher Kammern der Kapsel befindet und welche Verfahrensparameter und/oder Maschinenparameter bei der Oberflächenbehandlung wie einzustellen sind.

Bereit gestellt wird des Weiteren ein Verfahren zum Färben von Formteilen gemäß Anspruch 12, mit einer erfindungsgemäßen Vorrichtung , wobei das Verfahren folgende Schritte umfasst, nachdem die Kapsel in einen Betriebszustand versetzt wurde
(a) Füllen des Behältnisses mit einem flüssigen Trägermaterial, vorzugsweise Wasser,
(b) Beaufschlagen einer ersten Kammer der Kapsel mit einem Gas und/oder einem Fluid, sodass das in der ersten Kammer vorgesehene Oberflächenbehandlungsmittel aus der ersten Kammer in den Innenraum des Behältnisses entweicht.

"In einen Betriebszustand versetzen" bedeutet, dass eine gewünschte Kapsel in die Kapselaufnahme eingebracht wird, der Deckel oder der zweite Deckel verschlossen wird, sodass der Innenraum der Vorrichtung weitgehend druck-, fluid- und luftdicht verschlossen ist, und die Kapsel beispielsweise an den Kompressor angeschlossen ist.

Wenn die Kapsel mehr als eine Kammer aufweist, kann
- der Schritt (b) oder die Schritte (a) und (b) für jede weitere Kammer der Kapsel wiederholt werden, oder
- der Schritt (b) für jede Kammer der Kapsel im Wesentlichen gleichzeitig ausgeführt wird.

Nach dem Schritt (b) kann nach Ablauf eines vorbestimmten Zeitraumes in einem Schritt (c) das Trägermaterial-Oberflächenbehandlungsmittel-Gemisch aus dem Behältnis entfernt werden.

Der Schritt (c) ist ein optionaler Schritt.

Erfindungsgemäß kann in dem Verfahren eine weitere Kammer der Kapsel mit einem Gas und/oder Fluid beaufschlagt werden, um ein Entweichen des Oberflächenbehandlungsmittels aus dieser weiteren Kammer zu bewirken, ohne dass zunächst das bereits in der Vorrichtung enthaltene Trägermaterial-Oberflächenbehandlungsmittel-Gemisch aus dem Behältnis entfernt wird.

Ebenso kann es vorgesehen sein, den Schritt (a) nur einmalig auszuführen und lediglich den Schritt (b) für die weiteren Kammern der Kapseln zu wiederholen. So ist es beispielsweise möglich, dass während des Färbevorganges zeitlich hintereinander die Kammern der Kapseln geöffnet werden, damit das jeweilige Oberflächenbehandlungsmittel aus der entsprechende Kamer entweichen kann, ohne dass die Vorrichtung entleert wird und wobei der Schritt (a) lediglich einmal, z.B. am Anfang des Färbeverfahrens durchgeführt wird.

Vor oder nach dem Beaufschlagen der Kammer der Kapsel mit dem Fluid und/oder Gas kann das Trägermaterial bzw. das Trägermaterial-Oberflächenbehandlungsmittel-Gemisch erhitzt werden, vorzugsweise mit der an dem Behältnis angeordneten Heiz- und/oder Kühleinrichtung.

Als letzter Schritt des Verfahrens, der optional ist, können die in dem Behältnis eingebrachten Formteile getrocknet werden, vorzugsweise mit einer an dem Behältnis angeordneten Trocknungseinrichtung, etwa eine Warm- bzw. Heißlufteinrichtung, mit der der Innenraum des Behältnisses mit warmer bzw. heißer Luft beaufschlagt werden kann.

Ferner wird die Verwendung einer Kapsel zur Oberflächenbehandlung, insbesondere zum Färben von Formteilen, bereitgestellt, wobei die Formteile für die Oberflächenbehandlung in eine erfindungsgemäße Vorrichtung zur Oberflächenbehandlung eingebracht werden.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine erste Ausführungsform einer erfindungsgemäßen Vorrichtung zur Oberflächenbehandlung von Formteilen in einem Querschnitt;
- Fig. 2: eine Ausführungsform einer Kapsel zur Verwendung in einer erfindungsgemäßen Vorrichtung;
- Fig. 3: eine zweite Ausführungsform einer erfindungsgemäßen Vorrichtung;
- Fig. 4: eine alternative Ausführungsform eines Korbes mit einer Kapselaufnahme;
- Fig. 5: ein Beispiel einer Kapsel mit eingeführten Düsen einer Beaufschlagungseinrichtung;
- Fig. 6: eine alternative Ausgestaltung einer Düse;
- Fig. 7: eine Detailansicht einer Kapsel im Bereich der Einlass-/Auslassöffnung; und
- Fig. 8: einen Querschnitt durch eine konkrete Ausführungsform der Erfindung.

### Detaillierte Beschreibung der Erfindung

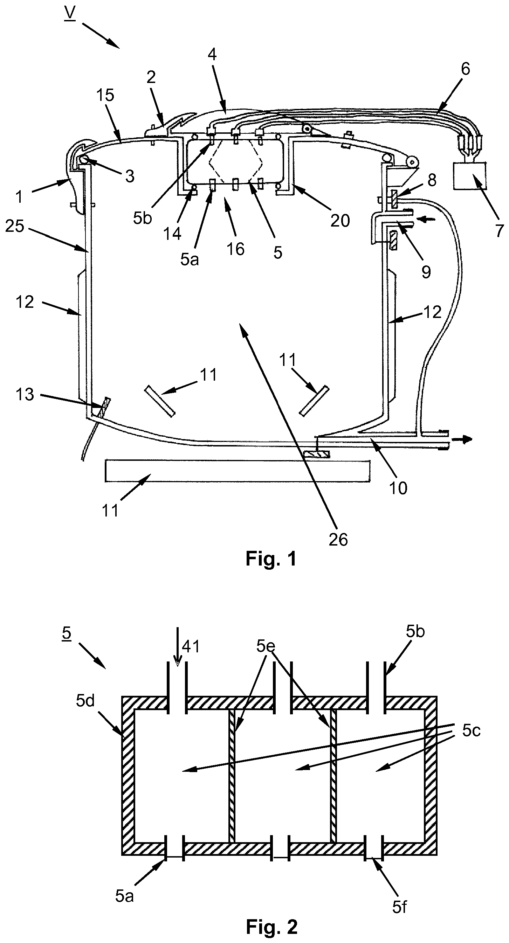

Fig. 1 zeigt eine Vorrichtung V zur Oberflächenbehandlung von Formteilen in einem Querschnitt.

Die Vorrichtung V besteht hier aus einem Behältnis 25, das mit einem ersten Deckel 15 verschließbar ist. Der erste Deckel 15 ist schwenkbar an dem oberen Rand des Behältnisses 25 angelenkt. Der erste Deckel 15 und das Behältnis 25 sind so dimensioniert, dass im Inneren der Vorrichtung ein Druck von etwa 0,3 Bar (Unterdruck) bis 2,5 Bar (Überdruck) erzeugt werden kann. Zum Erzeugen des Überdruckes ist die Vorrichtung an einen Kompressor angeschlossen. Zum Erzeugen des Unterdruckes ist die Vorrichtung über ein Ventil 8 an eine Vakuumpumpe angeschlossen.

Der erste Deckel 15 wird mittels einer Verriegelung 1 verschlossen. Zwischen dem ersten Deckel 15 und dem oberen Rand des Behältnisses 25 ist eine umlaufende Dichtung vorgesehen, die gewährleistet, dass der Deckel 15 fluid-, druck- und luftdicht verschlossen werden kann.

In der in Fig. 1 gezeigten Ausgestaltung der Vorrichtung V ist in dem ersten Deckel 15 eine Kapselaufnahme 20 vorgesehen, die hier in den Innenraum 26 des Behältnisses 25 hineinragt und in der eine Kapsel 5 angeordnet werden kann. Die Kapselaufnahme 20 wird hier von einem zweiten Deckel 4 verschlossen, der schwenkbar an dem ersten Deckel 15 angelenkt ist. Ferner ist die Kapsel 5 bzw. der zweite Deckel 4 so ausgestaltet bzw. dimensioniert, dass beim Schließen des zweiten Deckels 4 die Kapsel 5 gegen der Boden der Kapselaufnahme 20 gedrückt wird. In dem Boden der Kapselaufnahme 20 ist eine Öffnung 16 vorgesehen in der AuslassÖffnungen 5a der Kapsel 5 angeordnet sind bzw. hineinragen. Über die Auslassöffnungen 5a der Kapsel 5 wird ein in der Kapsel 5 aufgenommenes Oberflächenbehandlungsmittel, etwa ein Färbemittel, dem Innenraum 26 des Behältnisses 25 zugeführt, wie weiter unten nähen beschrieben wird.

Die Öffnung 16 der Kapselaufnahme 20 weist eine umlaufende Dichtung 14 auf, auf der die Kapsel 5 aufliegt und gegen die die Kapsel 5 gedrückt wird. Die Kapsel bzw. der Boden der Kapsel weist demnach eine größer Grundfläche auf als die Öffnung 16 der Kapselaufnahme 20, d.h. die Kapsel ragt umlaufend über die Öffnung 16 der Kapselaufnahme 20 hinaus. Durch Drücken der Kapsel 5 gegen die Dichtung 14 wird gewährleistet, dass der Innenraum 26 des Behältnisses 25 luft-, fluidund druckdicht verschlossen ist, sobald auch der erste Deckel 14 geschlossen wird.

An der Unterseite des zweiten Deckels 4 bzw. an der der Kapsel 5 zugewandten Oberfläche des zweiten Deckels 4 kann ebenfalls eine umlaufende Dichtung vorgesehen sein, die bei geschlossenem Deckel 4 gegen die Kapsel gedrückt wird. Diese Dichtung dient einerseits dazu, dass die Kapsel 5 mit dem zweiten Deckel 4 nicht beschädigt wird. Andererseits dient sie dazu, dass der Raum zwischen Kapsel 5, zweitem Deckel 4 und dieser umlaufenden Dichtung weitgehend luft-, fluid- und druckdicht ausgestaltet ist. Denn an der Oberseite der Kapsel 5 und innerhalb dieser umlaufenden Dichtung sind Einlassöffnungen 5b der Kapsel 5 angeordnet, an die Zuleitungen angeschlossen sind, die hier als Druckschläuche 6 ausgestaltet sind.

Der zweite Deckel 4 kann ebenfalls mit einer Verriegelung 2, die an dem ersten Deckel 15 angeordnet ist, verschlossen werden.

An dem zweiten Deckel 4 sind hier Pneumatikkupplungen vorgesehen, die über die Druckschläuche 6 einerseits mit den Einlassöffnungen 5b der Kapsel 5 und andererseits mit einem Kompressor 7 gekoppelt sind. Der Kompressor ist hier als externer Kompressor 7 gezeigt. Er kann aber auch integraler Bestandteil der Vorrichtung V sein. Mit dem Kompressor 7 wird die Kapsel 5 (d.h. der Innenraum der Kapsel 5) mit Druck (Überdruck) beaufschlagt, vorzugsweise mit einem Gas und/oder einem Fluid. Der in der Kapsel 5 so erzeugte Überdruck bewirkt, dass das in der Kapsel 5 vorgesehene Oberflächenbehandlungsmittel durch die Auslassöffnungen 5a der Kapsel 5 in den Innenraum 26 des Behältnisses 25 entweichen kann. Mit dem zugeführten Gas und/oder Fluid kann zudem die Kammer der Kapsel durchgespült werden, sodass das Oberflächenbehandlungsmittel vollständig aus der Kammer entweicht.

Die Kapsel 5 weist bei der in Fig. 1 gezeigten Ausgestaltung drei Kammern auf, die jeweils mit einem Oberflächenbehandlungsmittel gefüllt sind. Je nach konkretem Anwendungsfall können aber auch mehr als drei oder weniger als drei Kammern vorgesehen sein. Jeder der drei Kammern ist eine Auslassöffnung 5a und eine Einlassöffnung 5b zugeordnet. Erfindungsgemäß ist es vorgesehen, dass jede der Kammern unabhängig voneinander mit einem Gas, etwa Druckluft, und/oder mit einem Fluid, etwa Wasser, beaufschlagt werden kann, sodass beispielsweise die in den Kammern enthaltenen Oberflächenbehandlungsmittel in bestimmten zeitlichen Abständen hintereinander dem Innenraum 26 zugeführt werden können.

Den Kammern können jeweils auch mehrere Auslassöffnungen 5a und mehrere Einlassöffnungen 5b zugeordnet sein.

Der Kompressor 7 ist hier mit einer Steuereinrichtung oder mit einer Datenverarbeitungseinrichtung gekoppelt, die den Kompressor so steuert, dass die einzelnen Kammern der Kapsel 5 gemäß einem vorbestimmten Programmablauf mit einem Gas und/oder Fluid beaufschlagt und damit entleert werden.

Der einzuhaltende Programmablauf hängt im Wesentlichen von den in den Kammern der Kapseln vorhandenen Oberflächenbehandlungsmittel und von der Materialbeschaffenheit der zu bearbeitenden Formteile ab. Das heißt die Kammern müssen gegebenenfalls zu unterschiedlichen Zeitpunkten oder in unterschiedlicher Reihenfolge mit dem Gas und/oder Fluid beaufschlagt werden. Hierzu ist es vorgesehen, dass an der Kapsel Barcodes, QR-Codes, RFID-Tags oder NFC-Tags angeordnet sind, die mit einem entsprechenden (hier nicht gezeigten) Lesegerät ausgelesen werden können. Das Lesegerät kann etwa an der Unterseite des zweiten Deckels 4 angeordnet sein (wenn die Codes oder Tags an der Oberseite der Kapsel 5 angeordnet sind) oder an einer Innenseite einer Seitenwand der Kapselaufnahme 20 (wenn die Codes oder Tags an einer Seitenwand der Kapsel 5 angeordnet sind).

Die Codes bzw. die Tags enthalten zumindest Information darüber, welches Oberflächenbehandlungsmittel sich in welcher Kammer der Kapsel befindet. Weitere Information, die in den Codes oder Tags enthalten und mit dem Lesegerät gelesen werden können, können sein:
- Reihenfolge, in der die Kammern mit Druck zu beaufschlagen sind,
- Druck/Temperatur/pH-Wert der im Inneren 26 des Behältnisses beim Entleeren der jeweiligen Kammer vorherrschen muss,
- Mindest-/Maximalmenge eines Trägermittels (z.B. Wasser), das im Inneren 26 des Behältnisses enthalten sein muss,
- Sollwerte bestimmter Betriebsparameter der Vorrichtung V.

Je nach konkreter Anwendung können noch weitere Information enthalten sein.

Das Lesegerät kann mit der Steuereinrichtung oder Datenverarbeitungseinrichtung gekoppelt sein, die dann anhand der gelesenen Information die Vorrichtung V und den Kompressor 7 steuern kann, sodass eine komplette Oberflächenbehandlung vollautomatisch und im Wesentlichen ohne menschliches Zutun abgewickelt werden kann. Es müssen nur mehr die zu bearbeitenden Formteile in die Vorrichtung V eingebracht und nach Abschluss der Oberflächenbehandlung wieder aus der Vorrichtung V entnommen werden. Nach Einbringen der Kapsel 5 in die Kapselaufnahme 20 werden sämtliche für die Oberflächenbehandlung notwendigen Parameter und Daten von den Tags bzw. Codes ausgelesen und der Steuer- bzw. Datenverarbeitungseinrichtung zugeführt. Die Oberflächenbehandlung muss von dem Bedienpersonal nur noch gestartet werden.

Damit ist ein deutlich höherer Durchsatz bei der Oberflächenbehandlung von Formteilen gegenüber den aus dem Stand der Technik bekannten Verfahren möglich. Zudem wird durch das Kapselsystem eine qualitativ gleichbleibende Oberflächenbehandlung gewährleistet, weil die Kapsel samt der darin enthaltenen Oberflächenbehandlungsmittel vorkonfektioniert werden können. Auf korrekte Mischungsverhältnisse der Oberflächenbehandlungsmittel muss nicht mehr geachtet werden, weil diese bereits in den korrekten Mischungsverhältnissen in den Kammern der Kapseln enthalten sind. Sofern es auf das Mischungsverhältnis von Oberflächenbehandlungsmittel und Trägermittel (z.B. Wasser) ankommt, so kann auch dieses durch entsprechenden Daten in den Codes bzw. Tags hinterlegt sein.

An dem Behältnis 25 ist eine Zufuhröffnung 9 vorgesehen, durch die das Trägermittel (z.B. Wasser) in das Innere 26 des Behältnisses 25 zugeführt werden kann. Die Zuführöffnung weist ein Absperrventil auf. Anstelle von Wasser kann auch ein anderes Trägermittel zugeführt werden, sofern es die Oberflächenbehandlung erfordert. Welches Trägermittel zuzuführen ist, kann ebenfalls in den Codes bzw. Tags an der Kapsel gespeichert sein. An der Zufuhröffnung 9 bzw. an der mit der Zufuhröffnung 9 gekoppelten Zuführleitung kann eine Heizeinrichtung angeordnet sein, etwa ein Durchlauferhitzer, mit der das dem Behältnis 25 zugeführte Trägermittel auf eine bestimmte Solltemperatur aufgeheizt werden kann. Diese Solltemperatur kann ebenfalls in den Codes bzw. Tags hinterlegt sein.

Am Boden des Behältnisses 25 ist ein Abfluss 10 mit einem Sperrventil vorgesehen, durch den das Gemisch aus Trägermittel und Oberflächenbehandlungsmittel abgeführt werden kann. Zum beschleunigten Ableiten dieses Gemisches aus dem Inneren 26 des Behältnisses 25 kann es vorgesehen sein, den Abfluss 10 mit einer Unterdruckabsaugeinrichtung zu koppeln.

Ferner sind am Behältnis 25 der Vorrichtung V Heiz- und/oder Kühleinrichtungen 12 angeordnet, um das Behältnis 25 zu kühlen und/oder aufzuheizen. Die Heizund/oder Kühleinrichtungen 12 können ebenfalls mit der Steuer- und oder Datenverarbeitungseinrichtung gekoppelt sein, sodass auch die für die Steuerung der Heiz- und/oder Kühleinrichtungen 12 benötigten Parameter in den Codes bzw. Tags an der Kapsel 5 hinterlegt sein können. Die Heiz- und/oder Kühleinrichtungen 12 können Heiz-/Kühlmanschetten oder einen ein Thermofluid aufnehmenden Mantel umfassen.

Des Weiteren sind Messwertfühler 13 vorgesehen, mit denen der Druck, der pH-Wert, die Temperatur und/oder weitere Messgrößen im Inneren 26 der Vorrichtung V gemessen werden können. Diese Messgrößen können wiederum der Steuerund/oder Datenverarbeitungseinrichtung zum Regeln der Oberflächenbehandlung zugeführt werden.

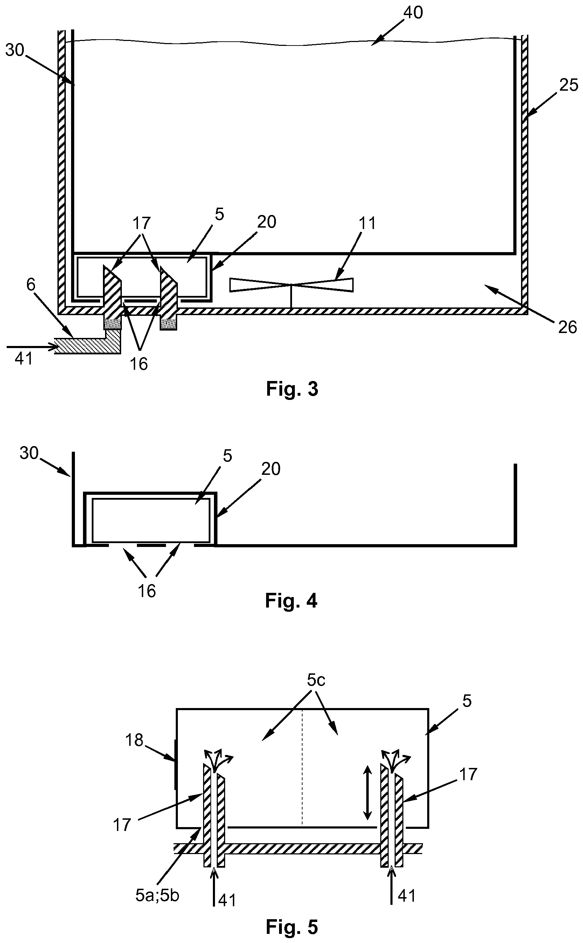

Dem Behältnis 25 ist ferner eine Rühreinrichtung zugeordnet. Bei der in Fig. 1 gezeigten Ausgestaltung der Erfindung ist die Rühreinrichtung als Magnetrührer 11 ausgestaltet. Alternativ können auch Stabrührer oder andere Rühreinrichtungen oder Rührvorrichtungen verwendet werden, was letztlich von der konkreten Anwendung und insbesondere von den zu behandelnden Formteilen abhängt. In Fig. 3 ist eine erfindungsgemäße Vorrichtung mit einem Schrägblattrührer gezeigt.

Die Rühreinrichtung ist in erster Linie dazu vorgesehen, das zugegebene Oberflächenbehandlungsmittel mit dem Trägermittel zu vermischen.

Die Rühreinrichtung kann aber auch dazu verwendet werden, das Trägermittel-Oberflächenbehandlungsmittel-Gemisch während des gesamten Behandlungsvorganges in Bewegung zu halten. Dadurch wird vermieden, dass sich das Oberflächenbehandlungsmittel auf dem Boden des Innenraumes absetzt oder auf dem Trägermittel schwimmt. Eine noch gleichmäßigere Oberflächenbehandlung wird so gewährleistet.

Die Vorrichtung V kann eine Anzeigeeinrichtung, etwa ein Display, aufweisen, um den aktuellen Behandlungsstatus, z.B. einen aktuellen Färbestatus, oder Fehlermeldungen anzuzeigen. Alternativ oder zusätzlich können auch ampelähnliche Vorrichtungen (z.B. LED-Leuchteirichtung) oder Lautsprecher vorgesehen sein, um etwa den aktuellen Behandlungsstatus oder Fehler zu signalisieren.

In einer Ausgestaltung der erfindungsgemäßen Vorrichtung V kann diese Reinigungsdüsen aufweisen, um den das Behältnis automatisch zu reinigen. In einer Ausgestaltung kann in dem Deckel eine Reinigungsdüse vorgesehen sein, um Spülwasser dem Innenraum zuzuführen. Ein Reinigungsmittel kann ebenfalls über eine solche Reinigungsdüse zugeführt werden. Das Reinigungsmittel kann aber auch über einen an der Seitenwandung des Behältnisses 25 vorgesehenen Zulauf zugeführt werden.

In einer Ausgestaltung der Erfindung ist es vorgesehen, die behandelten Formteile abschließend zu trocknen, solange sie sich noch in der Vorrichtung befinden.

Hierzu kann es vorgesehen sein, nach dem Ablassen des Gemisches durch den Abfluss 10 den Innenraum 26 für eine vorbestimmte Zeit auf eine vorbestimmte Temperatur aufzuheizen. Das Aufheizen kann mit Hilfe eines Temperaturfühlers 13 überwacht werden. Das Aufheizen kann so gesteuert werden, dass die Temperatur einem vorbestimmten zeitlichen Temperaturverlauf folgt, sodass beispielsweise nach einem Färbevorgang oder Imprägniervorgang vermieden werden kann, dass sich an der gefärbten bzw. imprägnierten Oberfläche temperaturbedingte Spannungsrisse bilden.

Alternativ kann der Innenraum 26 auch mit erwärmter bzw. aufgeheizter Luft beaufschlagt werden, um die Formteile zu trocknen.

In einer hier nicht gezeigten Ausgestaltung kann die Kapsel 5 auch außerhalb der Vorrichtung V angeordnet werden. In diesem Fall können die Auslassöffnungen 5a der Kapsel 5 über druckbeständige Leitungen mit an der Vorrichtung, z.B. an dem ersten Deckel 15, vorgesehenen Einlassventilen gekoppelt sein. Diese Einlassventile können mit der Steuer- und/oder Datenverarbeitungseinrichtung gekoppelt sein, um sie entsprechend eines Ablaufprogrammes öffnen und/oder schließen zu können. Auch bei dieser Ausgestaltung wird die Kapsel 5 bzw. werden die Kammern der Kapsel 5 mit einem Gas und/oder einem Fluid beaufschlagt, um die Oberflächenbehandlungsmittel in den Innenraum der Behältnisses einzubringen. Hier kann es sogar günstig sein, die Kapsel 5 bzw. die Kammern der Kapsel 5 dauerhaft mit einem Druck zu beaufschlagen, sodass beim Öffnen der entsprechenden Einlassventile bereits der für das Einbringen der Oberflächenbehandlungsmittel erforderliche Druck zur Verfügung steht.

Fig. 2 zeigt ein Beispiel einer Kapsel 5.

Die Kapsel 5 besteht aus einem vorzugsweise druckstabilen Gehäuse 5d, in der hier drei Kammern 5c ausgebildet sind. Die drei Kammern werden jeweils durch eine Kammerwandung 5e druck-, fluid-, und luftdicht voneinander getrennt. Jeder der drei Kammern ist eine Einlassöffnung 5b und eine Auslassöffnung 5a zugeordnet. Die Einlassöffnungen 5b können als Kupplungsteile ausgestaltet sein, an denen ein Druckschlauch angeschlossen werden kann. Die Auslassöffnungen 5a können Sperreinrichtung 5f aufweisen. Mit den Sperreinrichtungen 5f kann gesteuert werden, wann das in den jeweiligen Kammern 5c enthaltene Oberflächenbehandlungsmittel dem Innenraum 26 einer erfindungsgemäßen Vorrichtung V zugeführt wird.

Die Sperreinrichtungen können so ausgestaltet sein, dass sie sich bei einem in der jeweiligen Kammern 5c herrschenden Überdruck automatisch öffnen, beispielsweise als Rückschlagventile oder als Membran. Alternativ können auch aktive Sperreinrichtungen vorgesehen sein, etwa Magnetventile, mit denen die Auslassöffnungen 5a unabhängig vom Druck in den Kammern geöffnet bzw. geschlossen werden können.

An dem Gehäuse sind die vorstehend beschriebenen Codes bzw. Tags angeordnet.

Die Kapsel ist vorzugsweise als wiederverwendbar Kapsel vorgesehen, die nach Benutzung wieder befüllt werden kann, etwa durch einen Dienstleister.

**Fig. 3** zeigt einen unteren Abschnitt einer erfindungsgemäßen Vorrichtung in einem Querschnitt gemäß einem weiteren Ausführungsbeispiel. Auch bei der hier gezeigten Ausgestaltung wird das Behältnis 25 mit einem Deckel verschlossen, wobei der Deckel allerdings keinen weiteren bzw. keinen zweiten Deckel aufweist.

In den Innenraum 26 des Behältnisses 25 ist ein Korb 30 angeordnet, in dem die zu behandelnden Formteile aufgenommen werden. Der Korb kann als Gitterkorb ausgestaltet sein.

Am Boden des Behältnisses 25 ist ein Rührwerk angeordnet, das hier als Schrägblattrührer 11 ausgestaltet ist und zum Vermischen des Oberflächenbehandlungsmittels mit dem Trägermittel vorgesehen ist.

Im Unterschied zu der in Fig. 1 gezeigten Ausgestaltung ist hier die Kapselaufnahme 20 an dem Korb 30 angeordnet, uns zwar am Boden des Korbes. Die Kapselaufnahme 20 selbst kann ebenfalls die Struktur des Gitterkorbes 30 aufweisen, das heißt als Gitterbox ausgestaltet sein. Sofern die Kapselaufnahme 20 als Gehäuse ausgestaltet ist, ist im Boden des Gehäuses zumindest eine Öffnung 16 vorgesehen, durch die die nachfolgend beschriebenen Düsen 17 an die Kapsel 5, die in der Kapselaufnahme angeordnet ist, heranführbar sind. Bei der hier gezeigten Ausgestaltung ist die Kapselaufnahme 20 an der bodenseitigen Außenseite des Korbes 30 angeordnet.

Am Boden des Behältnisses 25 ist eine Beaufschlagungseinrichtung vorgesehen, mit der die Kammern der Kapsel 5 mit einem Gas und/oder Fluid 41 beaufschlagt werden. Die Beaufschlagungseinrichtung ist als eine Anzahl von Düsen 17 ausgebildet, die im Wesentlich senkrecht am Boden des Behältnisses 25 angeordnet sind und über eine bestimmte Länge in den Innenraum 26 des Behältnisses 25 hineinragen. Die Länge der Düsen 17 ist so zu bemessen, dass diese nach dem Einbringen des Korbes 30 mit der daran angeordneten Kapsel 5 in den Innenraum 26 in das Innere der Kapsel eindringen können, wie in Fig. 3 ersichtlich.

An der Unterseite des Behältnisses 25 können Anschlüsse vorgesehen sein, um eine oder mehrere Zuleitungen 6 an die Düsen anzuschließen. Über diese Zuleitungen 6 wird das Gas und/oder Fluid den Düsen zugeführt. Die Zuleitungen sind vorzugsweise mit einem hier nicht gezeigten Kompressor gekoppelt, um das Gas und\oder Fluid druckbeaufschlagt in die Kapsel 5 einzubringen.

Die Funktionsweise der Düsen 17 und das Zusammenwirken mit der Kapsel 5 werden mit Bezug auf Fig. 5 näher erläutert.

Damit die in der Kapselaufnahme 20 angeordnete Kapsel 5 korrekt oberhalb den Düsen platziert wird, ist es vorteilhaft, an dem Korb senkrecht verlaufende Führungsschienen vorzusehen, die mit an der Innenwandung des Behältnisses vorgesehenen Führungsschienen korrespondieren. Vorzugsweise sind die Führungsschienen so an dem Korb und an der Innenwandung angeordnet, dass der Korb 30 nur in einer radialen Ausrichtung in den Innenraum 26 des Behältnisses 25 eingebracht werden kann. Ferner sind die Führungsschienen so relativ zu der Kapselaufnahme 20 angeordnet, dass sich diese beim Einbringen des Korbes 30 in den Innenraum genau oberhalb der Düsen 17 befindet.

**Fig. 4** zeigt eine alternative Ausgestaltung des unteren Abschnittes eines Korbes 30. Der Korb 30 selbst kann auch hier als Gitterkorb ausgestaltet sein. Im Unterschied zu der in Fig. 3 gezeigten Ausgestaltung, ist die Kapselaufnahme 20 nicht an bodenseiteigen Außenseite des Gitterkorbes 30 sondern an der bodenseitigen Innenseite des Gitterkorbes angeordnet, sodass Kapselaufnahme 20 in das Innere des Gitterkorbes hineinragt. Alternativ kann die Kapselaufnahme 20 auch so am Boden des Gitterkorbes angeordnet sein, dass sie teilweise in das Innere des Korbes hineinragt und teilweise an der Unterseite des Korbes übersteht.

Auch bei der in Fig. 4 gezeigten Ausgestaltung des Korbes 30 weist die Kapselaufnahme 20 an der Unterseite zumindest eine Öffnung 16 auf, durch die die Düsen an die Kapsel 5 heranführbar sind.

Bei sämtlichen der vorstehend gezeigten Kapselaufnahmen sind diese so ausgestaltet, dass die Kapsel austauschbar in der Kapselaufnahme anordenbar ist.

Ferner können sämtliche der vorstehend gezeigten Kapselaufnahmen so ausgestaltet sein, dass mehrere Kapseln in ihnen angeordnet werden können. So können beispielsweise anstelle der in Fig. 2 gezeigten Kapsel 5 mit drei Kammern 5c drei Kapseln 5 mit jeweils einer Kammer 5c in der Kapselaufnahme angeordnet werden.

**Fig. 5** zeigt ein Beispiel einer Kapsel 5 mit eingeführten Düsen 17 einer Beaufschlagungseinrichtung.

Die Kapsel 5, die in einer Kapselaufnahme 20 des Korbes 30 angeordnet ist, wird durch Absenken des Korbes in dem Innenraum 26 auf die oberen Enden der Düsen 17 aufgesetzt.

Durch ein weiteres Absenken des Korbes 30, etwa beim Verschließen des Deckels 15, wird der Boden der Kapsel 5 von den Düsen 17 durchstochen. Dadurch werden in dem Boden der Kapsel 5 Einlassöffnungen 5a ausgebildet, durch die die Düsen 17 in die Kammern 5c der Kapsel hineinragen. Um das Durchstechen des Bodens zu erleichtern können an den Spitzen der Düsen Klingen oder dergleichen vorgesehen sein.

Die Düsen 17 und/oder der Boden der Kapsel sind so ausgestaltet, dass die in den Einlassöffnungen 5a angeordneten Düsen 17 die Einlassöffnungen nicht druck- und fluiddicht verschließen. Dadurch ist gewährleistet, dass das in der Kapsel aufgenommene Oberflächenbehandlungsmittel aus der Kapsel entweichen kann.

Nachdem die Düsen 17 die Kapselwandung durchstochen haben und in das Innere der Kapsel hineinragen wird über eine Zuleitung 6 Gas und/oder Fluid 41 den Düsen 17 zugeführt. Das Gas und/oder Fluid 41 entweicht dann aus den im Inneren der Kapsel angeordneten Düsenenden. Durch dieses Beaufschlagen der Kapselkammern 5c mit dem Gas und/oder Fluid 41 findet im Inneren der Kapsel ein Verdrängungsprozess statt, der das Oberflächenbehandlungsmittel durch die Einlassöffnungen 5a aus der Kapsel entweichen lässt. Die Einlassöffnungen 5a dienen damit auch gleichzeitig als Auslassöffnungen 5b.

In einer Ausgestaltung der Erfindung können eine oder mehrere Düsen axial bewegbar ausgestaltet sein, wie in Fig. 5 mit dem Doppelpfeil für die rechte Düse symbolisiert. So kann nach dem Aufstechen des Bodens die Düse entlang ihrer Längsachse vollständig oder teilweise aus der Kapsel 5 herausgefahren werden. Die Düse kann in diesem Fall funktionslos betrieben werden, das heißt nur als Spitze zum Aufstechen des Bodens, ohne dass über sie ein Gas und/oder Fluid der Kapsel zugeführt wird. Wird die Düse vollständig aus der Kapsel herausgefahren entsteht eine Auslassöffnung 5b, dessen Durchmesser im Wesentlichen dem maximalen Durchmesser der Düse entspricht. Wir nur eine der in einer Kammer angeordneten Düsen 17 herausgefahren und wird über die in der Kammer verbleibende Düse ein Gas und/oder Fluid der Kammer zugeführt kann das Oberflächenbehandlungsmittel auch durch die vergleichsweise große Auslassöffnung entweichen.

In einer weiteren Ausgestaltung kann die axial verfahrbare Düse soweit nach oben verfahrbar sein, dass sie auch den Deckel der Kapsel durchstechen kann. Nach dem Durchstechen des Deckels kann die Düse soweit nach unten verfahren werden, dass sie einerseits das Loch in dem Deckel vollständig freigibt und sich andererseits die Spitze der Düse noch im Inneren der Kapsel befindet. Dadurch können zusätzliche Auslassöffnung geschaffen werden, durch die das Oberflächenbehandlungsmittel in den Innenraum 26 des Behältnisses 25 entweichen kann.

Das Gas und/oder Fluid 41 wird vorzugsweise Druckbeaufschlagt der Kammer 5c zugeführt. Der Druck wird hierbei so gewählt, dass dieser größer ist als der Innendruck des Behältnisses. Dadurch wird gewährleistet, dass das Oberflächenbehandlungsmittel in den Innenraum des Behältnisses entweicht. Wird der Kammer 5c ein Fluid, etwa Wasser, zugeführt wird die Kammer quasi ausgespült.

An der seitlichen Außenwandung der Kapsel 5 ist hier ein Code 18, etwa ein Barcode oder ein RFID-Tag angeordnet. Hierzu korrespondierend kann an der seitlichen Innwandung des Behältnisses 25 eine entsprechende Leseeinrichtung angeordnet sein. Die Funktionsweise und Verwendung der Leseeinrichtung und des Codes 18 ist bereits vorstehend beschrieben worden.

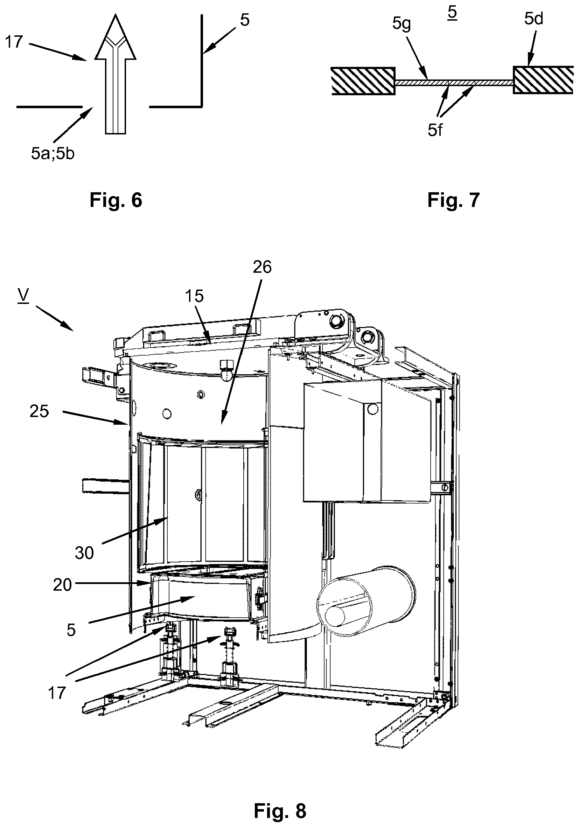

**Fig. 6** zeigt eine alternative Ausgestaltung einer Düse 17. Die Düse ist hier in Form eines Pfeiles ausgestaltet, wobei das vordere Ende breiter ist als der Schaft. Eine solche Ausgestaltung (breite Spitze und schmaler Schaft) hat den Vorteil, dass nach dem vollständigen Eindringen der Spitze in die Kammer der Kapsel eine Auslassöffnung 5b zur Verfügung steht, dessen Durchmesser im Wesentlichen dem Durchmesser der Spitze entspricht und damit deutlich größer ist als der Durchmesser des Schaftes.

**Fig. 7** zeigt eine Detailansicht einer Kapsel 5 im Bereich der Einlass-/Auslassöffnung 5a, 5b.

Im Bereich der Einlass-/Auslassöffnung 5a, 5b am Boden der Kapsel 5 ist ein Öffnungs- bzw. Einstichbereich 5g festgelegt, der von der Spitze der Düse 17 durchstochen wird. Dieser Einstichbereich 5g kann so ausgestaltet sein, dass die Wandstärke geringer ist als die Wandstärke des übrigen Kapselgehäuses. Das Material des Einstichbereichs 5g kann hierbei dasselbe sein wie das Material des übrigen Kapselgehäuses.

In einer Ausgestaltung kann der Einstichbereich 5g auch ein anderes Material aufweisen als das übrige Kapselgehäuse. Vorzugsweise wird für den Einstichbereich 5g ein weiches Material vorgesehen, während für das übrige Kapselgehäuse ein festes Material vorgesehen wird. Beispielsweise kann der Einstichbereich 5g gummiartig ausgestaltet sein, sodass ein leichtes Durchstechen mit der Düse gewährleistet wird. Steht der gummiartige Einstichbereich 5g unter einer Zugspannung, kann sich Material nach dem Durchstechen zusammenziehen, wodurch sich der Durchmesser der Auslassöffnung vergrößert.

In einer Ausgestaltung kann in dem Einstichbereich 5g eine oder mehrere Sollbruchstellen 5f vorgesehen sein, was das Durchstechen mit der Düse ebenfalls erleichtert. Die Sollbruchstellen können hierbei unabhängig vom für den Einstichbereich 5g verwendeten Material vorgesehen sein.

**Fig. 8** zeigt eine konkrete Ausführung einer erfindungsgemäßen Vorrichtung in einer Schnittansicht, wobei für die Erfindung nicht relevante Bestandteile der Vorrichtung nicht gezeigt sind.

Erkennbar sind hier insbesondere das Behältnis 25 mit dem darin angeordneten Korb 30 sowie zwei am Boden des Behältnisses 25 angeordnete Düsen 17. Die Düsen 17 sind axial verfahrbar, um den Boden der Kapsel 5 zu durchstechen und ein Gas und/oder ein Fluid dem Innenraum der Kapsel zuzuführen.

Es hat sich gezeigt, dass sich die erfindungsgemäße Vorrichtung V insbesondere zur Oberflächenbehandlung, z.B. Färben und/oder Imprägnieren von Formteilen, die in einem pulverbasierten Fertigungs- bzw. Druckverfahren (3D-Druckverfahren) hergestellt werden, eignet.

So kann beispielsweise eine erste Kammer der Kapsel 5 ein Mittel zum Vorbehandeln der Formteile enthalten, z.B. Albegal. Eine zweite Kammer kann ein Färbemittelgemisch aus einem Farbstoff und etwaigen Zusatzstoffen, etwa zum anschließenden Färben der Formteile enthalten. Eine dritte Kammer kann ein Mittel zum Nachbehandeln der Formteile enthalten, wiederum z.B. Albegal. Das Nachbehandeln kann auch ein Imprägnieren der Formteile umfassen, sodass in der dritten Kammer ein entsprechendes Imprägniermittel enthalten sein kann. Dementsprechend ist es bei dieser beispielhaften Anwendung erfindungsgemäß vorgesehen, die drei Kammern der Kapsel 5 in der vorstehend beschriebenen Reihenfolge mit dem Gas und/oder Fluid zu beaufschlagen, um die jeweiligen in den Kammern enthaltenen Behandlungsmittel in dieser Reihenfolge in den Innenraum der 26 der Vorrichtung V einzubringen.

Während der Behandlung der Formteile kann der Innenraum je nach Bedarf mit einem Überdruck oder mit einem Unterdruck beaufschlagt werden. So kann es beim Imprägnieren von Formteilen vorteilhaft sein, nach dem Einbringen der zu imprägnierenden Formteile den Innenraum zunächst mit Unterdruck zu beaufschlagen und bei Vorhandensein des Unterdruckes das Imprägniermittel aus der Kapsel und das Trägermittel einzubringen. Nach dem Einbringen des Imprägniermittels und des Trägermittels kann der Innenraum sodann mit einem Überdruck beaufschlagt werden, sodass Imprägniermittel auch in kleinste Poren der Formteile gedrückt wird.

### Bezugszeichen:

- V: Vorrichtung zur Oberflächenbehandlung
- 1: Verriegelung für den großen Deckel 15
- 2: Verriegelung für den kleinen Deckel 4
- 3: Dichtungsring zwischen Behältnis 25 und großen Deckel 15
- 4: zweiter (kleiner) Deckel (ggf. mit integriertem Pneumatikverbinder)
- 5: Kartusche bzw. Kapsel mit mindesten einer, vorzugsweise drei Kammern
- 5a: Auslassöffnungen (z.B. Auslassventile)
- 5b: Einlassöffnungen (z.B. Einlassventile)
- 5c: Kammern der Kapsel 5
- 5d: druckstablies und fluiddichtes Gehäuse der Kapsel 5
- 5e: Kammerwandungen der Kapsel 5
- 5f: Sperreinrichtung (z.B. Rückschlagventil)
- 5g: Öffnungs- bzw. Einstichbereich in der Kapselwandung bzw. am Kapselboden
- 5f: Sollbruchstelle im Öffnungs- bzw. Einstichbereich 5g
- 6: Schläuche, z.B. Druckschläuche bzw. Pneumatikventile und -schläuche zum Zünden (Aktivieren) der Kammern der Kapsel 5
- 7: Kompressor zum Beaufschlagen der Kammern der Kapsel 5 mit Überdruck
- 8: Ventil zum Herstellen eines Unterdruckes
- 9: Fluidzufuhr, insbesondere Wasserzufuhr inklusive Absperrventil
- 10: Abfluss inklusive Absperrventil
- 11: Rührer, z.B. Magnetrührer und dazugehörige Magnete oder Schrägblattrührer
- 12: Heizeinrichtung (z.B. Heizmanschetten an der Wandung des Behältnisses 25)
- 13: Temperaturfühler
- 14: Dichtungsring zwischen Kapsel 5 und Kapselaufnahme 20
- 15: erster (großer) Deckel mit Kapselaufnahme 20
- 16: Öffnung in der Kapselaufnahme 20
- 17: Düsen zum Einbringen eines Gases und/oder eines Fluids in die Kammer(n) 5c der Kapsel 5
- 18: an der Kapsel 5 angebrachter Code, z.B. Strichcode, QR-Code, NFC- oder RFID-Tag
- 20: Kapselaufnahme bzw. Kapselhalter, z.B. im Deckel 15 oder am Korb 30
- 25: Behältnis
- 26: Innenraum des Behältnisses 25 bzw. der Vorrichtung V
- 30: Korb zur Aufnahme der Formteile
- 40: Fluid, z.B. Wasser, im Innenraum 26 des Behältnisses 25
- 41: Gas und/oder Fluid, das in die Kammer(n) 5c der Kapsel 5 eingebracht wird

## Patentansprüche

1. Vorrichtung (V) zum Färben von Formteilen, mit
- einem Behältnis (25),
- einen in den Innenraum (26) des Behältnisses (25) ein- und ausbringbaren Korb (30) zur Aufnahme einer Anzahl von zu behandelnden Formteilen,
- einem Deckel (15), wobei das Behältnis (25) mit dem Deckel (15) vorzugsweise druck-, fluid- und/oder luftdicht verschließbar ist, und
- einer Anordnung zum Einbringen von flüssigen oder pulverförmigen Oberflächenbehandlungsmitteln zum Färben in einen Innenraum (26) des geschlossenen Behältnisses (25), wobei
- die Anordnung eine Kapsel (5) und eine Beaufschlagungseinrichtung umfasst,
- in der Kapsel (5) die einzubringenden Oberflächenbehandlungsmittel aufgenommen sind, und
- die Beaufschlagungseinrichtung mit der Kapsel (5) koppelbar ist, um zumindest eine in der Kapsel (5) ausgebildete Kammer (5c) mit einem Gas oder einem Fluid (41) zu beaufschlagen, um das in der Kapsel aufgenommene Oberflächenbehandlungsmittel in den Innenraum (26) des Behältnisses (25) zu bringen, **dadurch gekennzeichnet dass**
die Anordnung zum Einbringen von flüssigen oder pulverförmigen Oberflächenmitteln eine Kapselaufnahme (20) zur Aufnahme der Kapsel (5) umfasst, wobei
- die Kapselaufnahme (20) an dem Korb (30) angeordnet ist, wobei die Kapsel (5) so in der Kapselaufnahme (20) anordenbar ist, dass sie beim Einbringen des Korbes in das Behältnis (25) an die Beaufschlagungseinrichtung heranführbar ist und gegen die Beaufschlagungseinrichtung gedrückt wird.

2. Vorrichtung nach dem vorhergehenden Anspruch, wobei die Kapselaufnahme (20) zumindest eine Öffnung (16) aufweist, durch die die einzubringenden Oberflächenbehandlungsmittel von der Kapsel (5) in den Innenraum (26) des Behältnisses (25) gelangen.

3. Vorrichtung nach einem der vorhergehenden Ansprüche, wobei die Beaufschlagungseinrichtung zumindest eine Zuleitung (6) aufweist, um das Gas oder Fluid (41) der zumindest einen Kammer (5c) der Kapsel (5) zuzuführen, wobei die Zuleitung (6) durch eine Wandung des Behältnisses (25) in den Innenraum (26) des Behältnisses geführt ist.

4. Vorrichtung nach Anspruch 3, wobei
- das innenraumseitige Ende der Zuleitung (6) als Düse (17) ausgestaltet ist, oder
- im Innenraum (26) des Behältnisses (25) zumindest eine Düse (17) angeordnet ist, wobei die Düse mit der Zuleitung (6) gekoppelt oder koppelbar ist,
wobei die Düse angepasst ist, eine Wandung der Kapsel (5) zu durchdringen oder durchzustechen, wenn die Kapsel gegen die Düse gedrückt wird.

5. Vorrichtung nach Anspruch 4, wobei die Kapsel (5) so in der Kapselaufnahme (20) anordenbar ist, dass sie beim Einbringen des Korbes in das Behältnis (25) gegen die Düsen (17) gedrückt wird, wobei die Vorrichtung so ausgestaltet ist, dass ein Drücken der Kapsel (5) gegen die Düsen (17) ein Durchdringen oder ein Durchstechen der Wandung der Kapsel (5) bewirkt.

6. Vorrichtung nach dem vorhergehenden Anspruch, wobei das Drücken der Kapsel (5) gegen die Düsen (17) von dem Deckel (15) bewirkt wird, wenn der Deckel geschlossen wird.

7. Vorrichtung nach Anspruch 3, wobei die Beaufschlagungseinrichtung einen Kompressor (7) aufweist, der mit der Kapsel (5) über die zumindest eine Zuleitung (6) koppelbar ist, um das Gas oder das Fluid mit einem Druck in den Innenraum der Kapsel (5) einzubringen, der größer ist als der Innendruck des Behältnisses (25).

8. Vorrichtung nach Anspruch 4, wobei zumindest eine Düse (17) in axialer Richtung bewegbar ausgestaltet ist, vorzugsweise soweit, dass die Düse ein Durchstechen der Wandung der Kapsel (5) bewirkt.

9. Vorrichtung nach einem der vorhergehenden Ansprüche, wobei diese
- eine Fluidzufuhr (9) aufweist, über das ein Fluid, insbesondere Wasser in den Innenraum (26) des Behältnisses (25) einbringbar ist, wobei der Fluidzufuhr (9) ein Absperrventil zugeordnet ist, und/oder
- eine Einrichtung aufweist, mit der der Innenraum (26) des Behältnisses (25) mit einem Unterdruck und/oder Überdruck beaufschlagbar ist, und/oder
- einen Abfluss (10) aufweist, um den Innenraum (26) des Behältnisses (25) zu entleeren, vorzugsweise mittels einer mit dem Abfluss (10) koppelbaren Unterdruckabsaugeinrichtung.

10. Vorrichtung nach einem der vorhergehenden Ansprüche, wobei dem Behältnis (25) eine Heiz- und/oder Kühleinrichtung (12), vorzugsweise eine Heizund/oder Kühlmanschette zugeordnet ist, zum Aufheizen und/oder Abkühlen des Innenraumes (26).

11. Vorrichtung nach einem der vorhergehenden Ansprüche, wobei die Beaufschlagungseinrichtung angepasst ist, eine Anzahl von in der Kapsel (5) ausgebildeten Kammern (5c) getrennt und unabhängig voneinander mit dem Gas oder dem Fluid (41) zu beaufschlagen.

12. Verfahren zum Färben von Formteilen, mit einer Vorrichtung (V) nach einem der Ansprüche 1 bis 11, wobei die Kapsel zumindest eine Kammer (5c) aufweist, wobei in der zumindest einen Kammer ein Oberflächenbehandlungsmittel zum Färben aufgenommen ist, wobei
- die Formteile mit einem Korb (30) in das Behältnis (25) der Vorrichtung (V) gegeben werden,
- in der Kapselaufnahme (20) des Korbes (30) die Kapsel (5) so angeordnet wird, dass beim Einbringen des Korbes (30) in das Behältnis (25) die Kapsel (5) gegen Düsen (17) der Beaufschlagungseinrichtung der Vorrichtung (V) gedrückt wird und die Düsen (17) die Wandung der Kapsel (5) durchstechen, und
- das Verfahren folgende Schritte umfasst, nachdem die Kapsel in einen Betriebszustand versetzt wurde
(a) Füllen des Behältnisses (25) mit einem flüssigen Trägermaterial, vorzugsweise Wasser, und
(b) Beaufschlagen einer ersten Kammer der Kapsel (5) mit einem Gas oder einem Fluid, sodass das in der ersten Kammer aufgenommene Oberflächenbehandlungsmittel aus der ersten Kammer in den Innenraum (26) des Behältnisses (25) entweicht.

13. Verfahren nach dem vorhergehenden Anspruch, wobei, wenn die Kapsel (5) mehr als eine Kammer (5c) aufweist,
- der Schritt (b) oder die Schritte (a) und (b) für jede weitere Kammer der Kapsel (5) wiederholt werden, oder
- der Schritt (b) für jede Kammer der Kapsel (5) im Wesentlichen gleichzeitig ausgeführt wird.

14. Verfahren nach einem der beiden vorhergehenden Ansprüche, wobei nach dem Schritt (b) nach Ablauf eines vorbestimmten Zeitraumes das Trägermaterial-Oberflächenbehandlungsmittel-Gemisch aus dem Behältnis (25) entfernt wird.

15. Verfahren nach einem der vorhergehenden Ansprüche 12 bis 14, wobei vor oder nach dem Beaufschlagen der Kammer der Kapsel (5) mit dem Fluid oder Gas das Trägermaterial bzw. das Trägermaterial-Oberflächenbehandlungsmittel-Gemisch erhitzt wird, vorzugsweise mit der an dem Behältnis (25) angeordneten Heiz- und/oder Kühleinrichtung (12).

## Claims

1. Apparatus (V) for dyeing molded parts, comprising
- a container (25),
- a basket (30) which can be brought into and out of the interior (26) of the container (25) for receiving a number of molded parts to be treated,
- a lid (15), the container (25) being closable with the lid (15) preferably in a pressure, fluid- and/or air-tight manner, and
- an arrangement for introducing liquid or powdery surface treatment agents for dyeing into an interior (26) of the closed container (25),
- the arrangement comprising a capsule (5) and a supply device,
- the surface treatment agents to be introduced being received in the capsule (5), and
- the supply device being couplable to the capsule (5) in order to supply a gas or a fluid (41) to at least one chamber (5c) formed in the capsule (5) in order to transfer the surface treatment agent received in the capsule into the interior (26) of the container (25), **characterized in that**
the arrangement for introducing liquid or powdery surface agents comprises a capsule receptacle (20) for receiving the capsule (5),
- the capsule receptacle (20) being arranged on the basket (30), the capsule (5) being arrangeable in the capsule receptacle (20) in such a way that when the basket is introduced into the container (25), the capsule can be brought up to the supply device and is pressed against the supply device.

2. Apparatus according to the preceding claim, wherein the capsule receptacle (20) has at least one opening (16) through which the surface treatment agents to be introduced pass from the capsule (5) into the interior (26) of the container (25).

3. Apparatus according to any of the preceding claims, wherein the supply device has at least one supply line (6) to feed the gas or the fluid (41) to the at least one chamber (5c) of the capsule (5), wherein the supply line (6) is fed through a wall of the container (25) into the interior (26) of the container.

4. Apparatus according to claim 3, wherein
- the end of the supply line (6) on the interior side is designed as a nozzle (17), or
- at least one nozzle (17) is arranged in the interior (26) of the container (25), wherein the nozzle is coupled or can be coupled to the supply line (6),
wherein the nozzle is adapted to penetrate or pierce a wall of the capsule (5) when the capsule is pressed against the nozzle.

5. Apparatus according to claim 4, wherein the capsule (5) can be arranged in the capsule receptacle (20) in such a way that it is pressed against the nozzles (17) when the basket is introduced into the container (25), wherein the apparatus is designed in such a way that pressing the capsule (5) against the nozzles (17) causes penetration or piercing of the wall of the capsule (5).

6. Apparatus according to the preceding claim, wherein the lid (15) causes the capsule (5) to be pressed against the nozzles (17) when the lid is closed.

7. Apparatus according to claim 3, wherein the supply device has a compressor (7) which can be coupled to the capsule (5) via the at least one supply line (6) in order to introduce the gas or the fluid into the interior of the capsule (5) at a pressure which is greater than the internal pressure of the container (25).

8. Apparatus according to claim 4, wherein at least one nozzle (17) is designed to be movable in the axial direction, preferably to the extent that the nozzle causes the wall of the capsule (5) to be pierced.

9. Apparatus according to any of the preceding claims, wherein said apparatus has
- a fluid supply (9) via which a fluid, in particular water, can be introduced into the interior (26) of the container (25), wherein the fluid supply (9) is assigned a shut-off valve, and/or
- a device with which the interior (26) of the container (25) can be subjected to a negative pressure and/or positive pressure, and/or
- a drain (10) in order to empty the interior (26) of the container (25), preferably by means of a vacuum suction device that can be coupled to the drain (10).

10. Apparatus according to any of the preceding claims, wherein the container (25) is assigned a heating and/or cooling device (12), preferably a heating and/or cooling sleeve, for heating and/or cooling the interior (26).

11. Apparatus according to any of the preceding claims, wherein the supply device is adapted to supply a number of chambers (5c) formed in the capsule (5) with the gas or the fluid (41) separately and independently of one another.

12. Method for dyeing molded parts by means of an apparatus (V) according to any of claims 1 to 11, wherein the capsule has at least one chamber (5c), wherein a surface treatment agent for dyeing is received in the at least one chamber, wherein
- the molded parts having a basket (30) are placed in the container (25) of the apparatus (V),
- the capsule (5) is arranged in the capsule receptacle (20) of the basket (30) in such a way that when the basket (30) is introduced into the container (25) the capsule (5) is pressed against nozzles (17) of the supply device of the apparatus (V) and the nozzles (17) pierce the wall of the capsule (5), and
- the method comprises the following steps after the capsule has been placed in an operational state
(a) filling the container (25) with a liquid substrate, preferably water, and
(b) supplying a gas or a fluid to a first chamber of the capsule (5) so that the surface treatment agent received in the first chamber escapes from the first chamber into the interior (26) of the container (25).

13. Method according to the preceding claim, wherein if the capsule (5) has more than one chamber (5c),
- step (b) or steps (a) and (b) are repeated for each further chamber of the capsule (5), or
- step (b) is carried out essentially simultaneously for each chamber of the capsule (5).

14. Method according to either of the two preceding claims, wherein after step (b), after a predetermined period of time, the mixture of substrate and surface treatment agent is removed from the container (25).

15. Method according to any of the preceding claims 12 to 14, wherein before or after supplying the fluid or gas to the chamber of the capsule (5), the substrate or the mixture of substrate and surface treatment agent is heated, preferably with the one heating and/or cooling device (12) arranged on the container (25).

## Revendications

1. Dispositif (V) permettant de colorer des pièces moulées, comportant
- un récipient (25),
- un panier (30) pouvant être inséré dans l'espace intérieur (26) du récipient (25) et en être extrait, et destiné à recevoir un certain nombre de pièces moulées à traiter,
- un couvercle (15), le récipient (25) pouvant être fermé avec le couvercle (15), de préférence de manière étanche à la pression, aux fluides et/ou à l'air, et
- un agencement permettant d'introduire des agents de traitement de surface liquides ou pulvérulents pour la coloration dans un espace intérieur (26) du récipient (25) fermé,
- l'agencement comprenant une capsule (5) et un moyen d'application,
- les agents de traitement de surface à introduire étant logés dans la capsule (5), et
- le moyen d'application pouvant être accouplé à la capsule (5) pour alimenter au moins une chambre (5c) formée dans la capsule (5) avec un gaz ou un fluide (41) de façon à amener l'agent de traitement de surface logé dans la capsule dans l'espace intérieur (26) du récipient (25), **caractérisé en ce que**
l'agencement permettant d'introduire des agents de surface liquides ou pulvérulents comprend un logement de capsule (20) destiné à recevoir la capsule (5),
- le logement de capsule (20) étant disposé sur le panier (30), la capsule (5) pouvant être disposée dans le logement de capsule (20) de manière à pouvoir être amenée jusqu'au moyen d'application lorsque le panier est inséré dans le récipient (25) et à être pressée contre le moyen d'application.

2. Dispositif selon la revendication précédente, dans lequel le logement de capsule (20) présente au moins une ouverture (16) par laquelle les agents de traitement de surface à introduire passent de la capsule (5) à l'espace intérieur (26) du récipient (25).

3. Dispositif selon l'une des revendications précédentes, dans lequel le moyen d'application présente au moins une conduite d'alimentation (6) destinée à acheminer le gaz ou le fluide (41) à l'au moins une chambre (5c) de la capsule (5), la conduite d'alimentation (6) étant guidée dans l'espace intérieur (26) du récipient à travers une paroi du récipient (25).

4. Dispositif selon la revendication 3, dans lequel
- l'extrémité de la conduite d'alimentation (6) côté espace intérieur est conçue sous forme de buse (17), ou
- au moins une buse (17) est disposée dans l'espace intérieur (26) du récipient (25), la buse étant accouplée ou pouvant être accouplée à la conduite d'alimentation (6), la buse étant adaptée pour pénétrer ou percer une paroi de la capsule (5) lorsque la
capsule est pressée contre la buse.

5. Dispositif selon la revendication 4, dans lequel la capsule (5) peut être disposée dans le logement de capsule (20) de manière à être pressée contre les buses (17) lorsque le panier est inséré dans le récipient (25), le dispositif étant conçu de telle sorte qu'une pression de la capsule (5) contre les buses (17) provoque la pénétration ou le perçage de la paroi de la capsule (5).

6. Dispositif selon la revendication précédente, dans lequel le pressage de la capsule (5) contre les buses (17) est provoqué par le couvercle (15) lorsque le couvercle est fermé.

7. Dispositif selon la revendication 3, dans lequel le moyen d'application présente un compresseur (7) qui peut être accouplé à la capsule (5) par l'intermédiaire de l'au moins une conduite d'alimentation (6) afin d'introduire le gaz ou le fluide avec une certaine pression dans l'espace intérieur de la capsule (5), laquelle pression est supérieure à la pression intérieure du récipient (25).

8. Dispositif selon la revendication 4, dans lequel au moins une buse (17) est conçue comme mobile dans la direction axiale, de préférence dans la mesure où la buse provoque le perçage de la paroi de la capsule (5).

9. Dispositif selon l'une des revendications précédentes, lequel dispositif
- présente une alimentation en fluide (9) par l'intermédiaire de laquelle un fluide, en particulier de l'eau, peut être introduit dans l'espace intérieur (26) du récipient (25), l'alimentation en fluide (9) étant associée à une vanne d'arrêt, et/ou
- présente un moyen de soumettre l'espace intérieur (26) du récipient (25) à une pression négative et/ou à une pression positive, et/ou
- présente un drain (10) permettant de vider l'espace intérieur (26) du récipient (25), de préférence au moyen d'un moyen d'aspiration à pression négative qui peut être accouplé au drain (10).

10. Dispositif selon l'une des revendications précédentes, dans lequel le récipient (25) est associé à un moyen de chauffage et/ou de refroidissement (12), de préférence à une manchette de chauffage et/ou de refroidissement, permettant de chauffer et/ou de refroidir l'espace intérieur (26).

11. Dispositif selon l'une des revendications précédentes, dans lequel le moyen d'application est adapté pour alimenter, en gaz ou en fluide (41), à un certain nombre de chambres (5c) formées dans la capsule (5), séparément et indépendamment les unes des autres.

12. Procédé permettant de colorer des pièces moulées, comportant un dispositif (V) selon l'une des revendications 1 à 11, dans lequel la capsule présente au moins une chambre (5c), un agent de traitement de surface pour la coloration étant reçu dans l'au moins une chambre,
- les pièces moulées étant placées dans le récipient (25) du dispositif (V) au moyen d'un panier (30),
- la capsule (5) étant disposée dans le logement de capsule (20) du panier (30) de telle sorte que lorsque le panier (30) est inséré dans le récipient (25), la capsule (5) est pressée contre des buses (17) du moyen d'application du dispositif (V) et les buses (17) percent la paroi de la capsule (5), et
- le procédé comprenant les étapes suivantes après que la capsule a été mise dans un état de fonctionnement
(a) remplissage du récipient (25) avec un matériau de support liquide, de préférence de l'eau, et
(b) alimentation d'une première chambre de la capsule (5) en un gaz ou en un fluide de telle sorte que l'agent de traitement de surface reçu dans la première chambre s'échappe de la première chambre pour se retrouver dans l'espace intérieur (26) du récipient (25).

13. Procédé selon la revendication précédente, dans lequel, si la capsule (5) présente plus d'une chambre (5c),
- l'étape (b) ou les étapes (a) et (b) sont répétées pour chaque autre chambre de la capsule (5), ou
- l'étape (b) est réalisée de manière sensiblement simultanée pour chaque chambre de la capsule (5).

14. Procédé selon l'une des deux revendications précédentes, dans lequel après l'étape (b), après l'écoulement d'une période de temps prédéfinie, le mélange de matériau de support et d'agent de traitement de surface est retiré du récipient (25).

15. Procédé selon l'une des revendications précédentes 12 à 14, dans lequel avant ou après l'alimentation de la chambre de la capsule (5) en fluide ou en gaz, le matériau de support ou le mélange de matériau de support et d'agent de traitement de surface est chauffé, de préférence à l'aide du moyen de chauffage et/ou de refroidissement (12) disposé sur le récipient (25).
